# EUROPEAN PATENT SPECIFICATION

(11) **EP 3 816 496 B1**
(45) Date of publication and mention of the grant of the patent: **07.09.2022**
(21) Application number: 20188399.8
(22) Date of filing: 29.07.2020
(51) Int. Cl.: F16L 55/00

(54) **A METHOD OF CONTROLLING HOSES AND PIPES THAT BECOME DISCONNECTED UNDER PRESSURE**
VERFAHREN ZUR STEUERUNG VON SCHLÄUCHEN UND ROHREN, DIE UNTER DRUCK GETRENNT WERDEN
PROCÉDÉ DE CONTRÔLE DES TUYAUX ET DES CONDUITES QUI SE DÉCONNECTENT SOUS PRESSION

(30) Priority: 31.10.2019 CA 3060779
(43) Date of publication of application: 05.05.2021
(73) Proprietor: Maxinus Inc., Leduc AB T9E 6L7 (CA)
(72) Inventor: Uhryn, Nikki L., Leduc, Alberta T9E 6L7 (CA)
(74) Representative: Appleyard Lees IP LLP

(56) References cited:
- WO-A1-02/16816
- US-A- 4 549 332

## Description

### FIELD OF THE DISCLOSURE

The present application relates generally to a method of controlling hoses and pipes that become disconnected under pressure, more specifically it relates to a method of whip-checking.

### BACKGROUND

This section provides background information to facilitate a better understanding of the various aspects of the invention. It should be understood that the statements in this section of this document are to be read in this light, and not as admissions of prior art.

It can be dangerous for personnel to be around pipes and hoses that are operating under pressure. When a pipe or hose under pressure is disconnected, whether intentionally or not, the pipe or hose may whip about as the pressure is released. The whipping pipe or hose may cause damage to personnel or other equipment. Limiting movement of a disconnected pipe or hose may help to limit damage to personnel and other equipment. WO 02/16816 A1 and US 4 549 332 A describe examples of the related art.

### BRIEF SUMMARY

There is provided a method of controlling hoses and pipes that become disconnected under pressure. A first elongated tether with a first end and a second end is provided. The first end of the first elongated tether is attached to a first hose or pipe adjacent a first hose or pipe connection end. The first end of the first elongated tether is then tightened around the first hose or pipe. The second end of the first elongated tether is attached to a second hose or pipe adjacent a second hose or pipe connection end. The second end of the first elongated tether is tightened around the second hose or pipe.

In one embodiment, the elongated tether is connected to the first hose or pipe and the second hose or pipe after a connection is made between the first hose or pipe and the second hose or pipe.

In another embodiment, the elongated tether is connected to the first hose or pipe and the second hose or pipe prior to a connection of the first hose or pipe and the second hose or pipe being completed. A further step of connecting the first hose or pipe to the second hose or pipe is completed after the elongated tether is connected to the first hose or pipe and the second hose or pipe.

In one embodiment, a further step of removing slack from the first elongated tether after connection between the first hose or pipe and the second hose or pipe is made is performed. Removing slack from the first elongated tether helps to further limit potential movement of the first hose or pipe and the second hose or pipe in the event of a disconnection under pressure.

In one embodiment, the first end of the first elongated tether and the second end of the first elongated tether are positioned substantially equidistant from a connection point of the first hose or pipe and the second hose or pipe when the first hose or pipe is connected to the second hose or pipe.

In one embodiment, the first end of the first elongated tether has a first loop.

In one embodiment, the first end of the first elongated tether is attached to a first hose or pipe by passing the second end of the first elongated tether through the first loop to create a tightenable loop around the first hose or pipe.

In one embodiment, the second end of the first elongated tether has a second loop. The second loop may be an adjustable eye loop or any other suitable loop known to a person skilled in the art.

In one embodiment, the second loop is attached to the second hose or pipe by wrapping the second loop around the second hose or pipe and connecting the second loop back to the elongated tether. A connector such as a carabiner, a tie or any other suitable connector known to a person skilled in the art may be used.

In one embodiment, a further step of anchoring the first elongated tether to an anchoring structure. The first elongated tether may be anchored using a choke hitch, a basket choke or any other suitable anchoring mechanism known to a person skilled in the art.

In one embodiment, the choke hitch is created using a second elongated tether. The second elongated tether has a first loop at a first end and a second loop at a second end. The second elongated tether is wrapped around the anchoring structure and the first loop is passed through the second loop. The first loop of the second elongated tether is attached to the first elongated tether using a connector.

In one embodiment, the basket choke is created using a second elongated tether. The second elongated tether has a first loop at a first end and a second loop at a second end. The second elongated tether is wrapped around the anchoring structure and the first loop of the second elongated tether and the second loop of the second elongated tether are connected to the first elongated tether.

In one embodiment, the first elongated tether is a synthetic rope. The second elongated tether may also be a synthetic rope.

In one embodiment, the first elongated tether is 30 - 64 inches (76 - 163 centimeters) in length. Length may vary depending upon the diameter of the hose or pipe, however a shorter length of first elongated tether helps to limit movement of first hose or pipe and second hose or pipe in relation to each other.

### BRIEF DESCRIPTION OF THE DRAWINGS

These and other features will become more apparent from the following description in which references are made to the following drawings, in which numerical references denote like parts. The drawings are for the purpose of illustration only and are not intended to in any way limit the scope of the invention to the particular embodiments shown.
FIG. 1 is a perspective view of an elongated tether.
FIG. 2 is a perspective view of the elongated tether of FIG. 1 in which the second end is being slid through the first loop.
FIG. 3 is a side elevation view of the first elongated tether being attached to a first hose or pipe.
FIG. 4 is a side elevation view of the first elongated tether being tightened around the first hose or pipe.
FIG. 5 is a side elevation view of the first elongated tether being attached to a second hose or pipe.
FIG. 6 is a side elevation view of the first elongated tether attached to the first hose or pipe and the second hose or pipe.
FIG. 7 is a side elevation view of the first hose or pipe and the second hose or pipe after being connected.
FIG. 8 is a side elevation view of the first elongated tether being positioned on the first hose or pipe and the second hose or pipe in its finalized position.
FIG. 9 is a side elevation view of the first elongated tether anchored with a choke hitch.
FIG. 10 is a side elevation view of the first elongated tether anchored with a basket choke.

### DETAILED DESCRIPTION OF THE PREFERRED EMBODIMENTS

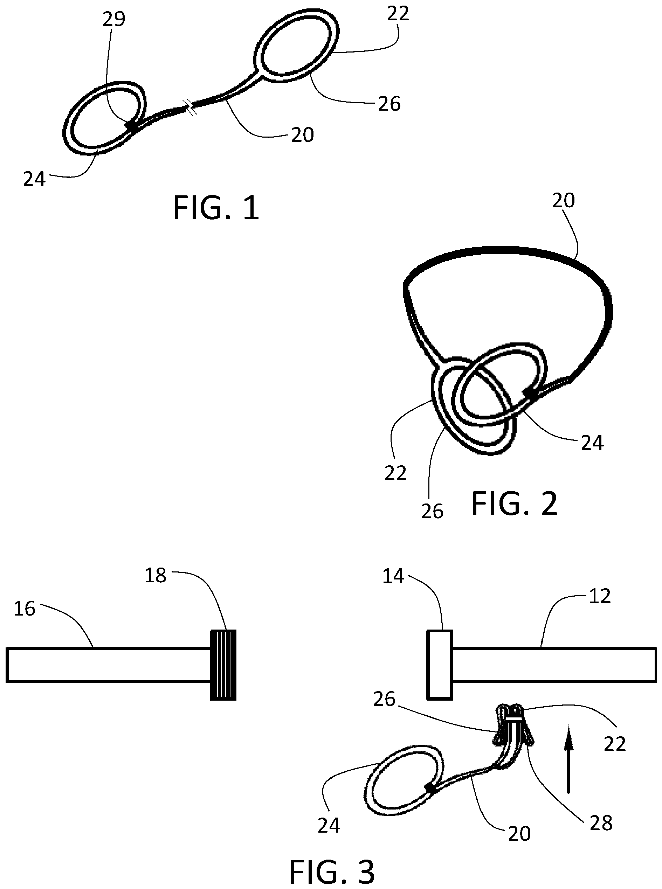

A method of controlling hoses and pipes that become disconnected under pressure will now be described with reference to FIG. 1 through FIG. 10.

Referring to **FIG.** 3, a first hose or pipe 12 has a first hose or pipe connection end 14 and a second hose or pipe 16 has a second hose or pipe connection end 18. First hose or pipe connection end 14 and second hose or pipe connection end 18 are connected together through a threaded connection or any other suitable connection known to a person skilled in the art. A first elongated tether 20 is provided to act as a safety mechanism when attached to first hose or pipe 12 and second hose or pipe 16.

Referring to **FIG. 1** and **FIG. 2****,** first elongated tether 20 has a first end 22 and a second end 24. First elongated tether 20 may be a synthetic rope or may be made of any other suitable material known to a person skilled in the art. First elongated tether 20 should have a tensile strength that can withstand the forces applied to it in the event of a disconnect. Referring to **FIG. 3****,** it will be understood that the tensile strength required will be different depending upon the amount of pressure of fluid within first hose or pipe 12 and second hose or pipe 16. A person of skill will be able to calculate the tensile strength required based upon the amount of pressure of fluid within first hose or pipe 12 and second hose or pipe 16. First elongated tether 20 is relatively short in length with a preferred length of 30 to 64 inches (76 - 163 centimeters). In one embodiment, first elongated tether is 34.5 inches (87.6 centimeters) in length. This short length helps to limit movement of first hose or pipe 12 and second hose or pipe 16 away from each other. In addition, the short length provides greater strength to first elongated tether 20. It will be understood by a person skilled in the art that different lengths of elongated tether 20 may be used.

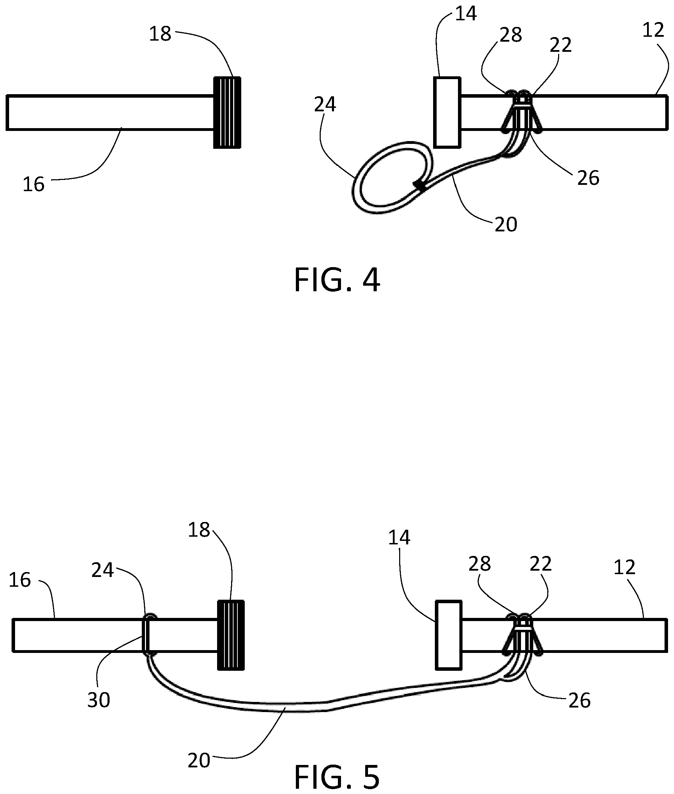

Referring to **FIG. 3****,** first end 22 of first elongated tether 20 is attached to first hose or pipe 12 adjacent first hose or pipe connection end 14. In the embodiment shown, first end 22 forms a first loop 26. First end 22 is attached to first hose or pipe 12 by passing second end 24 of first elongated tether 20 through first loop 26, as shown in **FIG. 2****,** to create a tightenable loop 28 that is slid over first hose or pipe connection end 14 and placed around first hose or pipe 12. It will be understood by a person skilled in the art that first end 22 of first elongated tether 20 may be attached in any other way known to a person skilled in the art. Referring to **FIG. 4****,** first end 22 is tightened around first hose or pipe 12.

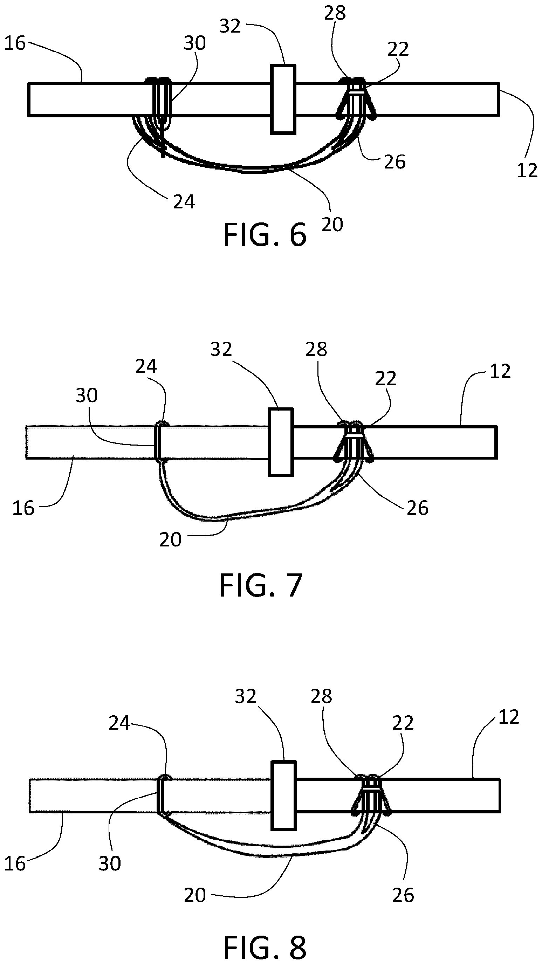

Referring to **FIG. 5****,** after first end 22 of first elongated tether 20 is attached to first hose or pipe 12, second end 24 of first elongated tether 20 is attached to second hose or pipe 16 adjacent second hose or pipe connection end 18. In the embodiment shown, second end 24 is a second loop 30. In the embodiment shown in **FIG. 5****,** second end 24 is attached to second hose or pipe 16 by sliding second loop 30 over second hose or pipe connection end 18 and placing it around second hose or pipe 16. In the embodiment shown, second loop 30 is an adjustable eye loop that can be tightened or loosening by sliding first elongated tether 20 through a binding 29, shown in **FIG. 1****.** It will be understood by a person skilled in the art that second loop 30 may be adjusted in any other fashion known to a person skilled in the art. In the embodiment shown in **FIG. 6****,** second end 24 is attached to second hose or pipe 16 by wrapping second loop 30 around second hose or pipe 16 and connecting second loop 30 back to the elongated tether 20. This effectively creates a loop around second hose or pipe 16. Connecting second loop 30 back to elongated tether 20 may be done using a carabiner, a tie or any other type of connector known to a person skilled in the art. It will be understood by a person skilled in the art that second end 24 of first elongated tether 20 may be attached in any other way known to a person skilled in the art. Second end 24 is tightened around second hose or pipe 16.

Referring to **FIG. 7****,** after first end 22 and second end 24 are attached to first hose or pipe 12 and second hose or pipe 16, respectively, first hose or pipe 12 and second hose or pipe 16 are connected.

Referring to **FIG. 8****,** to help limit movement of first hose or pipe 12 and second hose or pipe 16 away from each other, slack is removed from first elongated tether 20 after first hose or pipe 12 and second hose or pipe 16 is made. This is accomplished by loosening tightenable loop 28 and/or second loop 30 and moving them away from each other. After slack has been removed, it is preferable that tightenable loop 28 and second loop 30 be retightened around first hose or pipe 12 and second hose or pipe 16, respectively. In the embodiment shown, first end 22 and second end 24 of first elongated tether 20 are positioned substantially equidistant from a connection point 32 which is created when first hose or pipe 12 and second hose or pipe 16 are connected together.

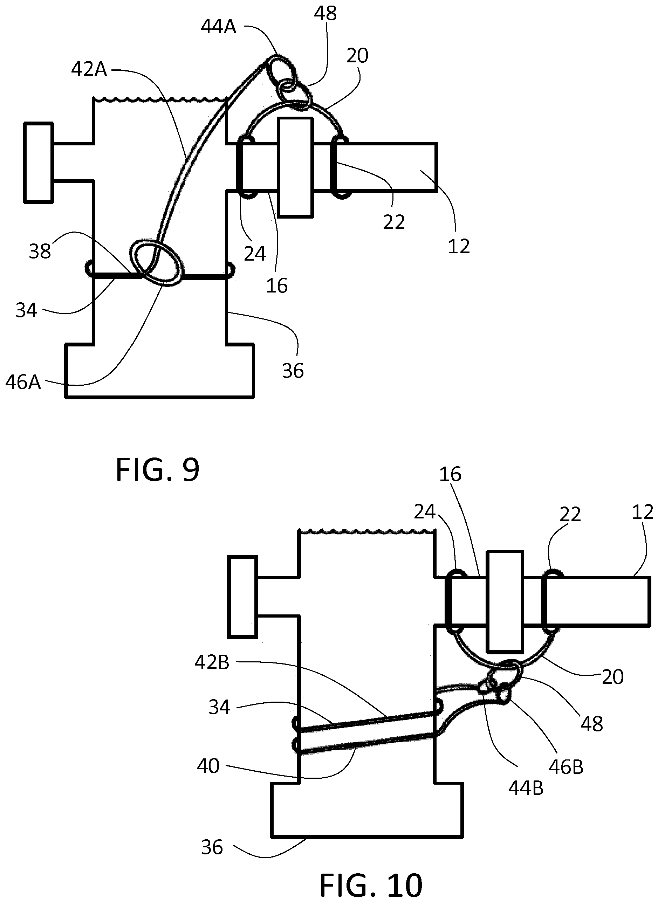

Referring to **FIG. 9** and **FIG. 10****,** an anchor 34 is used to provide additional hold for first hose or pipe 12 and second hose or pipe 16 in the event of a disconnect. First elongated tether 20 is anchored to an anchoring structure 36. In the embodiment shown in **FIG. 9****,** first elongated tether 20 is anchored using a choke hitch 38. In the embodiment shown, choke hitch 38 is created using a second elongated tether 42A that has a first loop 44A and a second loop 46A. Second elongated tether 42A is wrapped around anchoring structure 36 and first loop 46A is passed through second loop 44A to create choke hitch 38. First loop 44A of second elongated tether 42 is attached to first elongated tether 20 through the use of a connector 48. Connector 48 may be a carabiner or any other suitable connector known to a person skilled in the art. In the embodiment shown in **FIG. 10****,** first elongated tether 20 is anchored using a basket choke 40. In the embodiment shown, basket choke 40 is created using a second elongated tether 42B that has a first loop 44B and a second loop 46B. Second elongated tether 42B is wrapped twice around anchoring structure 36. First loop 44B and second loop 46B are attached to first elongated tether 20 through the use of a connector 48. Connector 48 may be a carabiner or any other suitable connector known to a person skilled in the art.

Any use herein of any terms describing an interaction between elements is not meant to limit the interaction to direct interaction between the subject elements, and may also include indirect interaction between the elements such as through secondary or intermediary structure unless specifically stated otherwise.

In this patent document, the word "comprising" is used in its non-limiting sense to mean that items following the word are included, but items not specifically mentioned are not excluded. A reference to an element by the indefinite article "a" does not exclude the possibility that more than one of the element is present, unless the context clearly requires that there be one and only one of the elements.

It will be apparent that changes may be made to the illustrative embodiments, while falling within the scope of the invention. As such, the scope of the following claims should not be limited by the preferred embodiments set forth in the examples and drawings described above, but should be given the broadest interpretation consistent within the scope of the claims.

## Claims

1. A method of controlling hoses and pipes that become disconnected under pressure comprising the steps of:
providing a first elongated tether (20), the first elongated tether having a first end (22) and a second end (24);
attaching the first end (22) of the first elongated tether (20) to a first hose or pipe (12) adjacent a first hose or pipe connection end (14);
tightening the first end (22) of the first elongated tether (20) around the first hose or pipe (12);
attaching the second end (24) of the first elongated tether (20) to a second hose or pipe (16) adjacent a second hose or pipe connection end (18);
tightening the second end (24) of the first elongated tether (20) around the second hose or pipe (16);
the method **characterized by**:
anchoring the first elongated tether (20) to an anchoring structure (36) using a basket choke (40), the basket choke (40) is a second elongated tether (42B), the second elongated tether (42B) having a first loop (44B) at a first end and a second loop (46B) at a second end, the second elongated tether (42B) being wrapped around the anchoring structure (36) and the first loop (44B) of the second elongated tether (42B) and the second loop (46B) of the second elongated tether (42B) being connected to the first elongated tether (20).

2. The method of claim 1 wherein the first elongated tether (20) is connected to the first hose or pipe (12) and the second hose or pipe (16) after a connection is made between the first hose or pipe (12) and the second hose or pipe (16).

3. The method of claim 1 wherein the first elongated tether (20) is connected to the first hose or pipe (12) and the second hose or pipe (16) prior to a connection of the first hose or pipe (12) and the second hose or pipe (16).

4. The method of claim 3 wherein a further step of connecting the first hose or pipe (12) to the second hose or pipe (16) is completed after the elongated tether (20) is connected to the first hose or pipe (12) and the second hose or pipe (16).

5. The method of claim 1 wherein a further step of removing slack from the first elongated tether (20) after connection between the first hose or pipe (12) and the second hose or pipe (16) is made.

6. The method of claim 1 wherein the first end (22) of the first elongated tether (20) and the second end (24) of the first elongated tether (20) are positioned substantially equidistant from a connection point (32) of the first hose or pipe (12) and the second hose or pipe (16) when the first hose or pipe (12) is connected to the second hose or pipe (16).

7. The method of claim 1 wherein the first end (22) of the first elongated tether (20) has a first loop (26).

8. The method of claim 7 wherein the first end (22) of the first elongated tether (20) is attached to a first hose or pipe (12) by passing the second end (24) of the first elongated tether (20) through the first loop (26) to create a tightenable loop (28) around the first hose or pipe (12).

9. The method of claim 1 wherein the second end (24) of the first elongated tether (20) has a second loop (30).

10. The method of claim 9 wherein the second loop (30) is an adjustable eye loop.

11. The method of claim 9 wherein the second loop (30) is attached to the second hose or pipe (16) by wrapping the second loop (30) around the second hose or pipe (16) and connecting the second loop (30) back to the first elongated tether (20).

12. The method of claim 1 wherein the first elongated tether (20) is a synthetic rope.

13. The method of claim 1 wherein the first elongated tether (20) is 30 - 64 inches (76 - 163 centimeters) in length.

14. A method of controlling hoses and pipes (12) that become disconnected under pressure comprising the steps of:
providing a first elongated tether (20), the first elongated tether having a first end (22) and a second end (24);
attaching the first end (22) of the first elongated tether (20) to a first hose or pipe (12) adjacent a first hose or pipe connection end (14);
tightening the first end (22) of the first elongated tether (20) around the first hose or pipe (12);
attaching the second end (24) of the first elongated tether (20) to a second hose or pipe (16) adjacent a second hose or pipe connection end (18);
tightening the second end (24) of the first elongated tether (20) around the second hose or pipe (16);
the method **characterized by**:
anchoring the first elongated tether (20) to an anchoring structure (36) using a choke hitch (38), the choke hitch (38) being a second elongated tether (42A), the second elongated tether (42A) having a first loop (44A) at a first end and a second loop (46A) at a second end, the second elongated tether (42A) being wrapped around the anchoring structure (36) and the first loop (44A) being passed through the second loop (46A), the first loop (44A) of the second elongated tether (42A) being connected to the first elongated tether (20).

## Patentansprüche

1. Verfahren zum Steuern von Schläuchen und Rohren, die sich unter Druck lösen, umfassend die folgenden Schritte:
Bereitstellen eines ersten länglichen Haltegurts (20), wobei der erste längliche Haltegurt ein erstes Ende (22) und ein zweites Ende (24) aufweist;
Anbringen des ersten Endes (22) des ersten länglichen Haltegurts (20) an einem ersten Schlauch oder Rohr (12) angrenzend an ein erstes Schlauch- oder Rohrverbindungsende (14);
Festziehen des ersten Endes (22) des ersten länglichen Haltegurts (20) um den ersten Schlauch oder das erste Rohr (12);
Anbringen des zweiten Endes (24) des ersten länglichen Haltegurts (20) an einem zweiten Schlauch oder Rohr (16) angrenzend an ein zweites Schlauch- oder Rohrverbindungsende (18);
Festziehen des zweiten Endes (24) des ersten länglichen Haltegurts (20) um den zweiten Schlauch oder das zweite Rohr (16);
wobei das Verfahren **gekennzeichnet ist durch**:
Verankern des ersten länglichen Haltegurts (20) an einer Verankerungsstruktur (36) unter Verwendung eines Hängegangs (40), wobei der Hängegang (40) ein zweiter länglicher Haltegurt (42B) ist, wobei der zweite längliche Haltegurt (42B) eine erste Schlaufe (44B) an einem ersten Ende und eine zweite Schlaufe (46B) an einem zweiten Ende aufweist, wobei der zweite längliche Haltegurt (42B) um die Verankerungsstruktur (36) gewickelt wird und die erste Schlaufe (44B) des zweiten länglichen Haltegurts (42B) und die zweite Schlaufe (46B) des zweiten länglichen Haltegurts (42B) mit dem ersten länglichen Haltegurt (20) verbunden werden.

2. Verfahren nach Anspruch 1, wobei der erste längliche Haltegurt (20) mit dem ersten Schlauch oder Rohr (12) und dem zweiten Schlauch oder Rohr (16) verbunden wird, nachdem eine Verbindung zwischen dem ersten Schlauch oder Rohr (12) und dem zweiten Schlauch oder Rohr (16) hergestellt ist.

3. Verfahren nach Anspruch 1, wobei der erste längliche Haltegurt (20) mit dem ersten Schlauch oder Rohr (12) und dem zweiten Schlauch oder Rohr (16) vor einer Verbindung des ersten Schlauchs oder Rohrs (12) und des zweiten Schlauchs oder Rohrs (16) verbunden wird.

4. Verfahren nach Anspruch 3, wobei ein weiterer Schritt zum Verbinden des ersten Schlauchs oder Rohrs (12) mit dem zweiten Schlauch oder Rohr (16) durchgeführt wird, nachdem der längliche Haltegurt (20) mit dem ersten Schlauch oder Rohr (12) und dem zweiten Schlauch oder Rohr (16) verbunden ist.

5. Verfahren nach Anspruch 1, wobei ein weiterer Schritt zum Beseitigen von Durchhang von dem ersten länglichen Haltegurt (20) nach einer Verbindung zwischen dem ersten Schlauch oder Rohr (12) und dem zweiten Schlauch oder Rohr (16) durchgeführt wird.

6. Verfahren nach Anspruch 1, wobei das erste Ende (22) des ersten länglichen Haltegurts (20) und das zweite Ende (24) des ersten länglichen Haltegurts (20) im Wesentlichen abstandsgleich von einem Verbindungspunkt (32) des ersten Schlauchs oder Rohrs (12) und des zweiten Schlauchs oder Rohrs (16) positioniert werden, wenn der erste Schlauch oder das erste Rohr (12) mit dem zweiten Schlauch oder Rohr (16) verbunden wird.

7. Verfahren nach Anspruch 1, wobei das erste Ende (22) des ersten länglichen Haltegurts (20) eine erste Schlaufe (26) aufweist.

8. Verfahren nach Anspruch 7, wobei das erste Ende (22) des ersten länglichen Haltegurts (20) an einem ersten Schlauch oder Rohr (12) durch Führen des zweiten Endes (24) des ersten länglichen Haltgurts (20) durch die erste Schlaufe (26) angebracht wird, um eine festziehbare Schlaufe (28) um den ersten Schlauch oder das erste Rohr (12) herzustellen.

9. Verfahren nach Anspruch 1, wobei das zweite Ende (24) des ersten länglichen Haltegurts (20) eine zweite Schlaufe (30) aufweist.

10. Verfahren nach Anspruch 9, wobei die zweite Schlaufe (30) eine verstellbare Ösenschlaufe ist.

11. Verfahren nach Anspruch 9, wobei die zweite Schlaufe (30) an dem zweiten Schlauch oder Rohr (16) durch Wickeln der zweiten Schlaufe (30) um den zweiten Schlauch oder das zweite Rohr (16) und Verbinden der zweiten Schlaufe (30) wieder mit dem ersten länglichen Haltegurt (20) angebracht wird.

12. Verfahren nach Anspruch 1, wobei der erste längliche Haltegurt (20) ein Synthetikseil ist.

13. Verfahren nach Anspruch 1, wobei der erste längliche Haltegurt (20) 30 - 64 Zoll (76 - 163 Zentimeter) lang ist.

14. Verfahren zum Steuern von Schläuchen und Rohren (12), die sich unter Druck lösen, umfassend die folgenden Schritte:
Bereitstellen eines ersten länglichen Haltegurts (20), wobei der erste längliche Haltegurt ein erstes Ende (22) und ein zweites Ende (24) aufweist;
Anbringen des ersten Endes (22) des ersten länglichen Haltegurts (20) an einem ersten Schlauch oder Rohr (12) angrenzend an ein erstes Schlauch- oder Rohrverbindungsende (14);
Festziehen des ersten Endes (22) des ersten länglichen Haltegurts (20) um den ersten Schlauch oder das erste Rohr (12);
Anbringen des zweiten Endes (24) des ersten länglichen Haltegurts (20) an einem zweiten Schlauch oder Rohr (16) angrenzend an ein zweites Schlauch- oder Rohrverbindungsende (18);
Festziehen des zweiten Endes (24) des ersten länglichen Haltegurts (20) um den zweiten Schlauch oder das zweite Rohr (16);
wobei das Verfahren **gekennzeichnet ist durch**:
Verankern des ersten länglichen Haltegurts (20) an einer Verankerungsstruktur (36) unter Verwendung eines Schnürgangs (38), wobei der Schnürgang (38) ein zweiter länglicher Haltegurt (42A) ist, wobei der zweite längliche Haltegurt (42A) eine erste Schlaufe (44A) an einem ersten Ende und eine zweite Schlaufe (46A) an einem zweiten Ende aufweist, wobei der zweite längliche Haltegurt (42A) um die Verankerungsstruktur (36) gewickelt wird und die erste Schlaufe (44A) **durch** die zweite Schlaufe (46A) geführt wird, wobei die erste Schlaufe (44A) des zweiten länglichen Haltegurts (42A) mit dem ersten länglichen Haltegurt (20) verbunden wird.

## Revendications

1. Procédé pour maîtriser des tuyaux flexibles et tuyaux qui se détachent sous pression, comprenant les étapes consistant à :
fournir une première attache allongée (20), la première attache allongée ayant une première extrémité (22) et une seconde extrémité (24) ;
attacher la première extrémité (22) de la première attache allongée (20) à un premier tuyau flexible ou tuyau (12), de façon adjacente à une extrémité de raccordement de premier tuyau flexible ou tuyau (14) ;
resserrer la première extrémité (22) de la première attache allongée (20) autour du premier tuyau flexible ou tuyau (12) ;
attacher la seconde extrémité (24) de la première attache allongée (20) à un second tuyau flexible ou tuyau (16), de façon adjacente à une extrémité de raccordement de second tuyau flexible ou tuyau (18) ;
resserrer la seconde extrémité (24) de la première attache allongée (20) autour du second tuyau flexible ou tuyau (16) ;
le procédé étant **caractérisé par** :
ancrer la première attache allongée (20) à une structure d'ancrage (36) en utilisant un étranglement en panier (40), l'étranglement en panier (40) est une seconde attache allongée (42B), la seconde attache allongée (42B) ayant une première boucle (44B) à une première extrémité et une seconde boucle (46B) à une seconde extrémité, la seconde attache allongée (42B) étant enroulée autour de la structure d'ancrage (36) et la première boucle (44B) de la seconde attache allongée (42B) et la seconde boucle (46B) de la seconde attache allongée (42B) étant reliées à la première attache allongée (20).

2. Procédé selon la revendication 1, dans lequel la première attache allongée (20) est reliée au premier tuyau flexible ou tuyau (12) et au second tuyau flexible ou tuyau (16) après qu'un raccordement est effectué entre le premier tuyau flexible ou tuyau (12) et le second tuyau flexible ou tuyau (16).

3. Procédé selon la revendication 1, dans lequel la première attache allongée (20) est reliée au premier tuyau flexible ou tuyau (12) et au second tuyau flexible ou tuyau (16) avant un raccordement du premier tuyau flexible ou tuyau (12) et du second tuyau flexible ou tuyau (16).

4. Procédé selon la revendication 3, dans lequel une étape supplémentaire consistant à raccorder le premier tuyau flexible ou tuyau (12) au second tuyau flexible ou tuyau (16) est achevée après que l'attache allongée (20) est reliée au premier tuyau flexible ou tuyau (12) et au second tuyau flexible ou tuyau (16).

5. Procédé selon la revendication 1, dans lequel une étape supplémentaire consistant à éliminer le mou de la première attache allongée (20) après que le raccordement entre le premier tuyau flexible ou tuyau (12) et le second tuyau flexible ou tuyau (16) est effectué.

6. Procédé selon la revendication 1, dans lequel la première extrémité (22) de la première attache allongée (20) et la seconde extrémité (24) de la première attache allongée (20) sont positionnées de façon sensiblement équidistante d'un point de raccordement (32) du premier tuyau flexible ou tuyau (12) et du second tuyau flexible ou tuyau (16) lorsque le premier tuyau flexible ou tuyau (12) est raccordé au second tuyau flexible ou tuyau (16).

7. Procédé selon la revendication 1, dans lequel la première extrémité (22) de la première attache allongée (20) a une première boucle (26).

8. Procédé selon la revendication 7, dans lequel la première extrémité (22) de la première attache allongée (20) est attachée à un premier tuyau flexible ou tuyau (12) en faisant passer la seconde extrémité (24) de la première attache allongée (20) à travers la première boucle (26) pour créer une boucle resserrable (28) autour du premier tuyau flexible ou tuyau (12).

9. Procédé selon la revendication 1, dans lequel la seconde extrémité (24) de la première attache allongée (20) a une seconde boucle (30).

10. Procédé selon la revendication 9, dans lequel la seconde boucle (30) est une boucle à œil ajustable.

11. Procédé selon la revendication 9, dans lequel la seconde boucle (30) est attachée au second tuyau flexible ou tuyau (16) en enroulant la seconde boucle (30) autour du second tuyau flexible ou tuyau (16) et reliant la seconde boucle (30) en retour à la première attache allongée (20).

12. Procédé selon la revendication 1, dans lequel la première attache allongée (20) est une corde synthétique.

13. Procédé selon la revendication 1, dans lequel la première attache allongée (20) mesure de 30 à 64 pouces (76 à 163 centimètres) de long.

14. Procédé pour maîtriser des tuyaux flexibles et de tuyaux (12) qui se détachent sous pression, comprenant les étapes consistant à :
fournir une première attache allongée (20), la première attache allongée ayant une première extrémité (22) et une seconde extrémité (24) ;
attacher la première extrémité (22) de la première attache allongée (20) à un premier tuyau flexible ou tuyau (12), de façon adjacente à une extrémité de raccordement de premier tuyau flexible ou tuyau (14) ;
resserrer la première extrémité (22) de la première attache allongée (20) autour du premier tuyau flexible ou tuyau (12) ;
attacher la seconde extrémité (24) de la première attache allongée (20) à un second tuyau flexible ou tuyau (16), de façon adjacente à une extrémité de raccordement de second tuyau flexible ou tuyau (18) ;
resserrer la seconde extrémité (24) de la première attache allongée (20) autour du second tuyau flexible ou tuyau (16) ;
le procédé étant **caractérisé par** :
ancrer la première attache allongée (20) à une structure d'ancrage (36) en utilisant une attache à étranglement (38), l'attache à étranglement (38) étant une seconde attache allongée (42A), la seconde attache allongée (42A) ayant une première boucle (44A) à une première extrémité et une seconde boucle (46A) à une seconde extrémité, la seconde attache allongée (42A) étant enroulée autour de la structure d'ancrage (36) et la première boucle (44A) étant passée à travers la seconde boucle (46A), la première boucle (44A) de la seconde attache allongée (42A) étant reliée à la première attache allongée (20).
